# EUROPÄISCHE PATENTSCHRIFT

(11) **EP 2 505 962 B1**
(45) Veröffentlichungstag und Bekanntmachung des Hinweises auf die Patenterteilung: **02.03.2016**
(21) Anmeldenummer: 11160707.3
(22) Anmeldetag: 31.03.2011
(51) Int. Cl.: G01C 21/36

(54) **Verfahren zum Betreiben einer in einem Fahrzeug angeordneten Navigationseinrichtung und Navigationseinrichtung**
Method for operating a navigation device in a vehicle and navigation device
Procédé de fonctionnement d'un dispositif de navigation agencé dans un véhicule et dispositif de navigation

(43) Veröffentlichungstag der Anmeldung: 03.10.2012
(73) Patentinhaber: TechniSat Digital GmbH, 01156 Dresden (DE)
(72) Erfinder: Kolanko, Jan, 01157, Dresden (DE)

(56) Entgegenhaltungen:
- WO-A1-2004/111574
- WO-A1-2005/090918
- DE-A1-102009 046 595
- JP-A- 2007 147 317
- JP-A- 2007 271 550

## Beschreibung

Die Erfindung betrifft ein Verfahren zum Betreiben einer in einem Fahrzeug angeordneten Navigationseinrichtung und eine Navigationseinrichtung.

Herkömmliche Navigationseinrichtungen sind als transportable Geräte ausgeführt oder mit einem Fortbewegungsmittel, beispielsweise einem Kraftfahrzeug, einem Schiff oder einem Flugzeug, fest verbunden. Die Navigationseinrichtungen bestimmen auf der Grundlage von Landkartendaten eine optimale Streckenführung bzw. Route, welche von einer Startposition zu einer Zielposition führt.

Die Landkartendaten repräsentieren raumbezogene Objekte und diesen zugeordnete Informationen, beispielsweise Straßen, Wege, Plätze, Eisenbahnlinien, Flüsse, Gebäude, Brücken, Geländeformen, Landesgrenzen, Parkmöglichkeiten, Raststätten, Verkehrsregelungen, Geschwindigkeitsbegrenzungen und Ortschaften. Diese Objekte und Informationen können mithilfe eines Zeichensystems auf einem Bildschirm dargestellt werden, um die realen räumlichen Verhältnisse für einen Betrachter des Bildschirms verständlich zu machen. Die Landkartendaten sind in der Regel zusammen mit einer Navigationssoftware in einer nichtflüchtigen Speichereinheit der Navigationseinrichtung abgelegt, beispielsweise in einem Flash-Speicher.

Die Position der Navigationseinrichtung wird meist unter Verwendung eines Satellitennavigationssystems bestimmt, beispielsweise unter Verwendung von GPS, GLONASS oder GALILEO. Dazu empfängt die Navigationseinrichtung mithilfe einer Satellitenantenne die Signale mehrerer geostationärer Satelliten und wertet diese Signale aus.

Üblicherweise muss die Navigationseinrichtung für eine genaue Positionsbestimmung die Signale von mindestens vier Satelliten gleichzeitig empfangen. Jedes der Signale enthält die Position des jeweiligen Satelliten und eine Zeitinformation. Aus diesen Daten errechnet die Navigationseinrichtung die vier Signallaufzeiten (von den Satelliten zur Satellitenantenne) und bestimmt darauf basierend ihre Position.

Die Zielposition wird in der Regel aus einem Ziel bestimmt, das ein Benutzer der Navigationseinrichtung über eine Eingabeeinrichtung, beispielsweise eine Tastatur oder einen Berührungsbildschirm, oder mittels Sprache in die Navigationseinrichtung eingibt.

Das Bestimmen einer optimalen Route, welche von der Startposition zu der Zielposition führt, kann mittels einer Recheneinheit der Navigationseinrichtung ausgeführt werden. Die Recheneinheit arbeitet einen Routenbestimmungsprozess ab, welcher die Landkartendaten aus der nichtflüchtigen Speichereinheit der Navigationseinrichtung verwendet.

Nach dem Bestimmen der optimalen Route kann die Route oder ein Abschnitt der Route auf einem der Navigationseinrichtung zugeordneten Bildschirm dargestellt werden. Dadurch kann ein Benutzer der Navigationseinrichtung eine räumliche Vorstellung von der Route oder von einem vor ihm liegenden Röutenabschnitt entwickeln, was ihm beispielsweise ermöglicht, Fahrmanöver vorausschauend zu planen.

Des Weiteren kann nach dem Bestimmen der optimalen Route eine Zielführung gestartet werden. Als Zielführung bezeichnet man einen Prozess, der einen Benutzer der Navigationseinrichtung entlang der optimalen Route führt. Während der Zielführung gibt die Navigationseinrichtung Fahranweisungen an den Benutzer aus, welche anhand der optimalen Route und einer aktuellen Fahrzeugposition der Navigationseinrichtung generiert werden.

Demgemäß gibt eine in einem Fahrzeug genutzte Navigationseinrichtung Fahranweisungen an den Fahrzeugführer des Fahrzeugs aus, beispielsweise über einen Bildschirm oder über eine Lautsprecheranlage.

Eine in einem Fortbewegungsmittel, beispielsweise einem Fahrzeug, fest eingebaute Navigationseinrichtung besitzt verschiedene Vorteile gegenüber transportablen Navigationsgeräten.So ist eine fest eingebaute Navigationseinrichtung meist besser auf die Fahrzeug-Hardware abgestimmt und kann auf verschiedene Fahrzeuginformationen zugreifen, wodurch die Navigation optimiert wird.

Nachteile einer in einem Fahrzeug fest eingebauten Navigationseinrichtung sind allerdings ihre Gebundenheit an das Fahrzeug, ihr hoher Anschaffungspreis und damit einhergehend die geringe Wirtschaftlichkeit ihres Austauschs gegen eine neuere und leistungsfähigere Version während der Lebensdauer des Fahrzeugs.

Viele Straßen weisen vor Kreuzungen oder Abzweigungen mehrere voneinander getrennte Richtungsfahrbahnen auf, die in der Regel durch Fahrtrichtungspfeile gekennzeichnet sind. Die Richtungsfahrbahnen dienen dazu, einen Fahrzeugstrom schon vor der jeweiligen Kreuzung oder Abzweigung entsprechend der geplanten Fahrtrichtungen der einzelnen Fahrzeuge aufzuteilen, sodass ein reibungsloser Verkehrsfluss gewährleistet wird.

Dementsprechend muss ein Fahrzeug, welches sich der Kreuzung oder Abzweigung nähert, auf derjenigen Richtungsfahrbahn eingeordnet werden, welche der für das Fahrzeug vorgesehenen Fahrtrichtung zugeordnet ist. Beispielsweise muss sich ein Fahrzeug, das an einer Kreuzung nach rechts abbiegen soll, in eine Rechtsabbiege-Fahrspur einordnen.

Um einem Fahrzeugführer die Auswahl der richtigen Fahrspur zu erleichtern, verfügen viele in Fahrzeugen genutzte Navigationseinrichtungen über Spurassistenten. Ein Spurassistent fordert den Fahrzeugführer während einer laufenden Zielführung vor Kreuzungen oder Abzweigungen auf, eine bestimmte Fahrspur zu benutzen. Diese Fahrspur wird von der betreffenden Navigationseinrichtung in der Regel unter Verwendung von Landkartendaten bestimmt, welche in einer nichtflüchtigen Speichereinheit der Navigationseinrichtung abgelegt sind.

Zum Ausgeben der bevorzugten Fahrspur an den Fahrzeugführer werden meist statisch, in der jeweiligen Navigationseinrichtung hinterlegte Bilder, die zu der jeweiligen Kreuzung passen, auf einem Bildschirm der Navigationseinrichtung eingeblendet. Die bevorzugte Fahrspur wird auf dem jeweiligen Bild optisch hervorgehoben, beispielsweise durch einen blinkenden Pfeil in einer auffälligen Farbe. Optional kann die bevorzugte Fahrspur auch mittels einer gesprochenen Fahranweisung akustisch über eine Läutsprecheranlage ausgegeben werden.

Bei manchen Navigationseinrichtungen werden grafische Abbiegepfeile in ein Foto einer realen Straßenszene einblendet, welches auf einem Bildschirm der jeweiligen Navigationseinrichtung dargestellt wird, wobei das Foto von einer in die Navigationseinrichtung eingebauten Kamera aufgenommen wurde.

Herkömmliche Spurassistenten können zwar eine bevorzugte Fahrspur entsprechend einer Zielführung bestimmen, aber keine von einem Fahrzeug, in dem sich die Navigationseinrichtung befindet, befahrene Fahrspur innerhalb mehrerer Fahrspuren.

Ein Grund dafür liegt in der Ungenauigkeit der zur Positionsbestimmung verwendeten Satellitennavigationssysteme, beispielsweise GPS. Die Genauigkeit der Positionsbestimmung mittels GPS beträgt derzeit im zivilen Bereich lediglich 7,8 m. Damit ist zwar eine grobe Bestimmung der Position eines Fahrzeugs entlang eines Fahrbahnverlaufs möglich, aber kein genaues Bestimmen der Position des Fahrzeugs entlang einer Fahrbahnbreite von nur wenigen Metern. Daher lässt sich mittels GPS nicht bestimmen, auf welcher von mehreren Fahrspuren einer Fahrbahn sich ein Fahrzeug befindet.

Mit anderen Worten kann mittels GPS zwar die ungefähre Entfernung eines Fahrzeugs von einer Kreuzung und auch die Fahrtrichtung des Fahrzeugs ermittelt werden, nicht aber die von dem Fahrzeug befahrene Fahrspur, bei der es sich beispielsweise um die linke, die mittlere oder die rechte von drei Fahrspuren handelt.

Daher wird die oben genannte Fahranweisung, gemäß der eine bestimmte Fahrspur zu wählen ist, unabhängig davon ausgegeben, auf welcher Fahrspur sich das Fahrzeug tatsächlich befindet.

Neben den oben genannten Spurassistenten sind auch so genannte "Spurhalteassistenten" bekannt, beispielsweise kamerabasierte und sensorbasierte Spurhalteassistenten. Ein solcher Spurhalteassistent kommt bei der Kontrolle eines fahrenden Fahrzeugs zum Einsatz und soll den Fahrzeugführer des Fahrzeugs in bestimmten Situationen unterstützen oder informieren.

Mittels des Spurhalteassistenten soll beispielsweise verhindert werden, dass das Fahrzeug eine Fahrspur ungewollt verlässt.

Beispielsweise soll verhindert werden, dass ein Fahrzeug über einen Seitenstreifen von einer Straße abkommt, beispielsweise durch eine Unachtsamkeit eines Fahrzeugführers. Dabei wird der Fahrzeugführer auf die Gefahrensituation akustisch und/oder optisch hingewiesen, beispielsweise durch einen Piepton, durch ein über Lautsprecher ausgestrahltes Rattern, durch den Einsatz eines Vibrationsmotors an der entsprechenden Seite des Fahrzeugführersitzes oder durch einen Warnhinweis auf einem Bildschirm.

Spezielle Spurhalteassistenten können aktiv in die Steuerung eines Fahrzeugs eingreifen, beispielsweise durch Gegenlenken. Derartige Spurhalteassistenten sind meist nur unter bestimmten Bedingungen aktiv, beispielsweise wenn die Fahrbahn linke und rechte Fahrbahnmarkierungen aufweist, die Fahrzeuggeschwindigkeit in einem bestimmten Bereich liegt, der Fahrzeugführer Kontakt zum Lenkrad hat, kein Blinker gesetzt ist und eine von dem Fahrzeugführer ausgeübte Lenkbewegung nicht auf einen Fahrspurwechsel hindeutet.

Mit den beschriebenen Spurassistenten und Spurhalteassistenten ist es nicht möglich, den Fahrzeugführer eines Fahrzeugs, das eine Fahrbahn mit mehreren Fahrspuren befährt, darauf aufmerksam zu machen, dass sich das Fahrzeug auf einer falschen Fahrspur gemäß einer Zielführung befindet. Insbesondere ist es damit nicht möglich, den Fahrzeugführer zu instruieren, wie er das Fahrzeug auf die richtige Fahrspur steuern kann.

Daher kann es beispielsweise vorkommen, dass ein Fahrzeug, welches gemäß einer Zielführung auf eine Linksabbiege-Fahrspur wechseln müsste, auf einer Geradeaus-Fahrspur weiterfährt und dadurch im weiteren Verlauf nicht nach links abbiegen darf, weshalb das Fahrzeug geradeaus fahren muss und so eine optimale Route verlässt.

WO 2004/111574 A1 beschreibt ein Navigationssystem für ein Fahrzeug mit einer Recheneinheit zum Bestimmen einer von dem Fahrzeug aktuell befahrenen Fahrspur und zum Vergleich der aktuell befahrenen Fahrspur mit einer aus Straßenkartendaten ausgewählten Fahrspur.

Die Aufgabe der Erfindung besteht darin, ein Verfahren zur Zielführung eines Fahrzeugs auf mehrspurigen Straßenabschnitten unter Verwendung fahrspurbezogener Fahranweisungen bereitzustellen, das sich durch eine erhöhte Zuverlässigkeit auszeichnet und mit geringem Zusatzaufwand realisierbar ist.

Die Aufgabe wird mit dem erfindungsgemäßen Verfahren zum Betreiben einer in einem Fahrzeug angeordneten Navigationseinrichtung gemäß dem Hauptanspruch gelöst.

Durch das erfindungsgemäße Verfahren kann der Fahrzeugführer eines Fahrzeugs darauf aufmerksam gemacht werden, dass sich das Fahrzeug auf einer falschen Fahrspur gemäß einer Zielführung befindet. Außerdem kann der Fahrzeugführer instruiert werden, wie er das Fahrzeug auf die richtige Fahrspur steuern kann. Dadurch wird beispielsweise vermieden, dass der Fahrzeugführer einer späteren Fahranweisung der Navigationseinrichtung nicht folgen kann, weil sich das Fahrzeug auf der falschen Fahrspur befindet.

Somit optimiert das erfindungsgemäße Verfahren die Zielführung auf mehrspurigen Straßenabschnitten durch zusätzliche fahrspurbezogene Informationen. Diese Informationen helfen dem Fahrzeugführer, indem sie ihn von der Wahl einer Fahrspur entlasten. Daher kann sich der Fahrzeugführer besser auf die Verkehrssituation konzentrieren, wodurch die Verkehrssicherheit erhöht wird.

Das erfindungsgemäße Verfahren ermöglicht außerdem, dass der Fahrzeugführer nur dann zu einem Fahrspurwechsel aufgefordert wird, wenn sich das Fahrzeug auf einer falschen Spur befindet. Sollte sich das Fahrzeug dagegen auf der richtigen Fahrspur befinden, wird keine solche Aufforderung ausgegeben. Damit werden überflüssige Ansagen der Navigationseinrichtung vermieden, was die Aufmerksamkeit des Fahrzeugführers für die Verkehrssituation und damit die Verkehrssicherheit weiter erhöht.

Neben der Aufforderung zu einem Fahrspurwechsel können mit dem erfindungsgemäßen Verfahren aber auch andere überflüssige Ansagen der Navigationseinrichtung vermieden werden, wie beispielsweise die Ansage: "Jetzt von der Autobahn abfahren.", wenn sich ein Fahrzeug bereits auf einer Autobahnabfahrts-Fahrspur befindet, welche parallel zu einer Autobahn-Hauptfahrbahn verläuft.

Weitere Ausführungsformen des erfindungsgemäßen Verfahrens ergeben sich aus den abhängigen Patentansprüchen.

Gemäß der Erfindung wird ferner eine Navigationseinrichtung bereitgestellt, welche in Anspruch 14 beschrieben ist.

Die Erfindung wird anhand von Ausführungsformen weiter erläutert. Dabei stellen die Figuren Folgendes dar:
Figur 1 zeigt ein Fahrzeug gemäß einer Ausführungsform der Erfindung.
Figur 2 zeigt ein Fahrzeug gemäß einer weiteren Ausführungsform der Erfindung in einer perspektivischen Darstellung.
Figur 3 zeigt ein Bild, das von einer Bildaufnahmeeinheit des in Figur 2 dargestellten Fahrzeugs aufgenommen wird.
Figur 4 zeigt ein Bild, dass von einem Bildschirm einer Navigationseinrichtung des in Figur 2 dargestellten Fahrzeugs ausgegeben wird.

Die Figuren 5 bis 8 zeigen jeweils eine Draufsicht auf ein Fahrzeug gemäß einer jeweils anderen Ausführungsform der Erfindung.

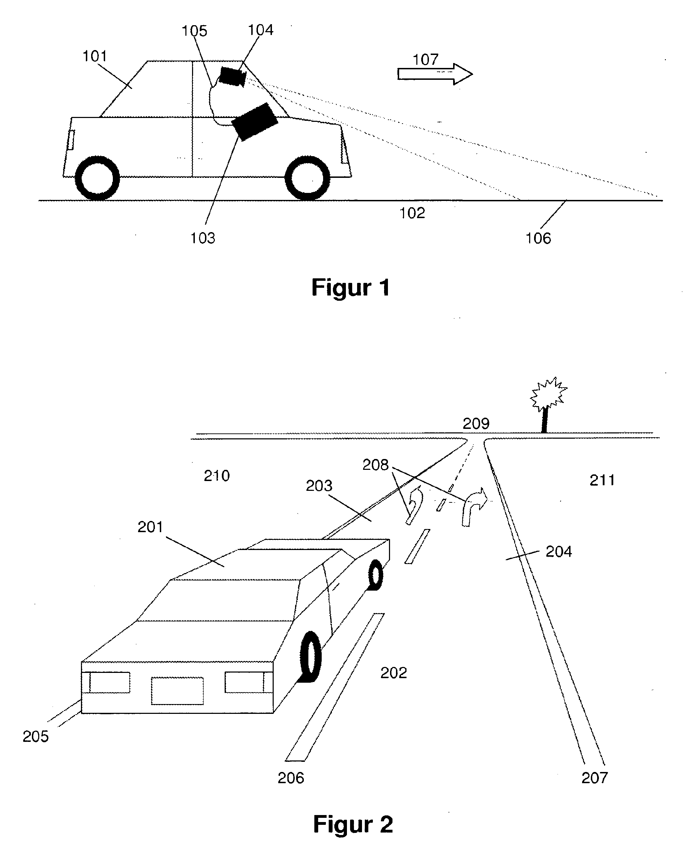

**Figur 1** zeigt ein Fahrzeug 101 gemäß einer Ausführungsform der Erfindung. Das Fahrzeug verfügt über eine Navigationseinrichtung 103 und eine Bildaufnahmeeinheit 104 und befährt eine Fahrbahn 102 in einer Fahrtrichtung 107. Die Fahrbahn 102 weist mehrere Fahrspuren auf, welche durch Fahrbahnmarkierungen (nicht gezeigt) voneinander getrennt sind.

Bei der Navigationseinrichtung 103 kann es sich um eine fest in dem Fahrzeug 101 eingebaute Navigationseinrichtung oder um eine transportable Navigationseinrichtung handeln. Die Navigationseinrichtung 103 ist mit einer nichtflüchtigen Speichereinheit ausgestattet, beispielsweise mit einem EEPROM oder mit einem Flash-Speicher. In der Speichereinheit sind Landkartendaten abgelegt, die einem Gebiet zugeordnet sind, beispielsweise dem Gebiet eines Landes oder dem Gebiet mehrerer Länger.

Außerdem verfügt die Navigationseinrichtung 103 über eine Ausgabeeinheit mit einem Berührungsbildschirm und einer Lautsprecheranlage. Der Berührungsbildschirm dient zum Eingeben eines Ziels durch einen Benutzer der Navigationseinrichtung 103. Über den Berührungsbildschirm können auch Fahranweisungen und andere Informationen an den Benutzer ausgegeben werden. Über die Lautsprecheranlage können ebenfalls Fahranweisungen an den Benutzer ausgegeben werden.

Des Weiteren verfügt die Navigationseinrichtung 103 über eine GPS-Antenne zur Positionsbestimmung, welche in der Navigationseinrichtung 103 integriert oder als separate Einheit ausgeführt sein kann.

Ferner weist die Navigationseinrichtung 103 eine Recheneinheit auf, beispielsweise eine CPU, welche zum Ausführen der Schritte des erfindungsgemäßen Verfahrens verwendet werden kann.

Bei der Bildaufnahmeeinheit 104 handelt es sich beispielsweise um eine digitale Fotokamera oder um eine digitale Videokamera.

Die Bildaufnahmeeinheit 104 kann mit dem Fahrzeug 101 fest verbunden sein oder als separates, das heißt von der Navigationseinrichtung103 räumlich getrenntes, tragbares Gerät beziehungsweise als Teil eines separaten tragbaren Geräts vorliegen.

Eine mit dem Fahrzeug 101 fest verbundene Bildaufnahmeeinheit 104 ist beispielsweise hinter der Frontscheibe, in einem Rückspiegel, auf dem Fahrzeugdach oder an der Fahrzeugfront des Fahrzeugs 101 angebracht. Eine solche Bildaufnahmeeinheit 104 hat den Vorteil, dass sie immer exakt ausgerichtet ist.

Eine als Teil eines separaten tragbaren Geräts vorliegende Bildaufnahmeeinheit 104 ist beispielsweise in einem Mobiltelefon, in einem Laptop oder in einem PDA eingebaut. In diesem Fall kann eine spezielle Halterung vorgesehen sein, mittels der sich das separate tragbare Gerät mit dem Fahrzeug 101 derart verbinden lässt, dass das Gerät in einer bestimmten Position fixiert wird, sodass ein vor dem Fahrzeug liegender Fahrbahnbereich 106 mittels der Bildaufnahmeeinheit 104 fotografiert werden kann. Beispielsweise kann das separate tragbare Gerät an der Frontscheibe des Fahrzeugs 101 angebracht sein.

Alternativ zu der gezeigten Bildaufnahmeeinheit 104 kann eine erfindungsgemäße Bildaufnahmeeinheit auch in einer Navigationseinrichtung eingebaut sein.

Die Navigationseinrichtung 103 und die Bildaufnahmeeinheit 104 sind über ein Verbindungskabel 105 miteinander verbunden. Über das Verbindungskabel 105 können Daten zwischen der Navigationseinrichtung 103 und der Bildaufnahmeeinheit 104 bidirektional übertragen werden, wobei ein spezielles Kommunikationsprotokoll verwendet werden kann, beispielsweise ein CAN-Protokoll oder ein LIN-Protokoll.

Alternativ dazu können die Navigationseinrichtung 103 und die Bildaufnahmeeinheit 104 auch über eine Funkverbindung miteinander verbunden sein. Über die Funkverbindung können Daten zwischen der Navigationseinrichtung 103 und der Bildaufnahmeeinheit 104 bidirektional übertragen werden, wobei ein spezielles Kommunikationsprotokoll verwendet werden kann, beispielsweise ein WLAN-Protokoll oder ein Bluetooth-Protokoll.

Der Datenaustausch zwischen der Bildaufnahmeeinheit 104 und der Navigationseinrichtung 103 beziehungsweise zwischen einem separaten tragbaren Gerät, in welchem die Bildaufnahmeeinheit 104 eingebaut ist, und der Navigationseinrichtung 103 kann mittels einer speziellen Kommunikationssoftware entsprechend dem eingesetzten Kommunikationsprotokoll gesteuert werden.

Mittels der Bildaufnahmeeinheit 104 können Bilder von dem vor dem Fahrzeug liegenden Fahrbahnbereich 106 in einem regelmäßigen zeitlichen Abstand aufgenommen werden. Der zeitliche Abstand beträgt beispielsweise 1/100 s, 1/10 s, 1 s oder 2 s.

Die Bildaufnahmeeinheit 104 kann von der Navigationseinrichtung 103 oder von einem separaten tragbaren Gerät, in welchem die Bildaüfnahmeeinheit 104 eingebaut ist, gesteuert werden. Dafür ist die Navigationseinrichtung 103 beziehungsweise das separate tragbare Gerät mit einer Bildaufnahmesoftware ausgestattet, mittels welcher Signale bereitgestellt werden, welche jeweils das Aufnehmen eines Bildes durch die Bildaufnahmeeinheit 104 bewirken.

Des Weiteren ist die Navigationseinrichtung 103 beziehungsweise das separate tragbare Gerät mit einer Bildauswertesoftware ausgestattet, mittels welcher von der Bildaufnahmeeinheit 104 aufgenommene Bilder ausgewertet werden können.

**Figur 2** zeigt ein Fahrzeug 201 gemäß einer weiteren Ausführungsform der Erfindung in einer perspektivischen Darstellung.

Das Fahrzeug 201 weist eine Navigationseinrichtung und eine Bildaufnahmeeinheit (nicht gezeigt) auf und befährt eine Fahrbahn 202. Die Navigationseinrichtung verfügt über eine nichtflüchtige Speichereinheit, in welcher Landkartendaten des Gebiets abgelegt sind, in welchem sich die Fahrbahn 202 befindet. Manche dieser Landkartendaten sind der Fahrbahn 202 zugeordnet und repräsentieren den Verlauf und weitere Eigenschaften der Fahrbahn 202, beispielsweise Kurveninformationen und die Anzahl der Fahrspuren der Fahrbahn 202. Außerdem verfügt die Navigationseinrichtung über eine Ausgabeeinheit mit einem Bildschirm und einer Lautsprecheranlage.

Das Fahrzeug 201 befährt die Fahrbahn 202, welche zwei Fahrspuren 203, 204 aufweist, in Richtung einer Einmündung 209 auf eine Querstraße. Die Fahrbahn ist durch die Fahrbahnmarkierungen 205, 206, 207, 208 gekennzeichnet. Bei den Fahrbahnmarkierungen handelt es sich um zwei durchgängige Begrenzungslinien 205, 207, eine aus mehreren Streifen bestehende (mehrstreifige) Leitlinien 206, welche zwischen den Fahrspuren 203, 204 verläuft, und zwei Fahrtrichtungspfeile 208, welche ein rechtzeitiges Einordnen in eine der beiden Fahrspuren 203, 204 empfehlen, entsprechend einer Absicht, an der Einmündung 209 nach links oder nach rechts abzubiegen. Außerdem zeigt Figur 2 zwei Flächen 210, 211, die neben der Fahrbahn 202 und der Querstraße angeordnet sind.

Gemäß der Erfindung wird zunächst die Position des Fahrzeugs 201 bestimmt. Danach wird unter Verwendung der Landkartendaten eine der Fahrzeugposition zugeordnete bevorzugte Fahrspur bestimmt.

Dazu werden zunächst folgende Eigenschaften der Fahrbahn 202 an der Fahrzeugposition des Fahrzeugs aus den Landkartendaten entnommen:
Die Fahrbahn 202 besitzt an der Fahrzeugposition zwei Fahrspuren 203, 204, die beide in Richtung der Einmündung 209 befahren werden dürfen. Ferner wird an der Fahrzeugposition das Einordnen in eine der beiden Fahrspuren 203, 204 empfohlen, nämlich das Einordnen in die linke Fahrspur 203 bei der Absicht, an der Einmündung 209 nach links abzubiegen, und das Einordnen in die rechte Fahrspur 204 bei der Absicht, an der Einmündung 209 nach rechts abzubiegen.

Zusätzlich wird ermittelt, in welche Richtung das Fahrzeug 201 an der Einmündung 209 gemäß einer auf einer vorausberechneten Route basierenden Zielführung abbiegen soll. Dementsprechend soll das Fahrzeug 201 an der Einmündung 209 nach rechts abbiegen.

Daraus, dass das Fahrzeug 201 nach rechts abbiegen soll und dass bei der Absicht, nach rechts abzubiegen, das Einordnen in die rechte Fahrspur 204 erfolgen soll, wird die rechte Fahrspur 204 als die bevorzugte Fahrspur ermittelt.

Damit ist das Bestimmen der bevorzugten Fahrspur abgeschlossen.

Anschließend wird unter Verwendung der Bildaufnahmeeinheit eine der Fahrzeugposition zugeordnete aktuelle Fahrspur bestimmt.

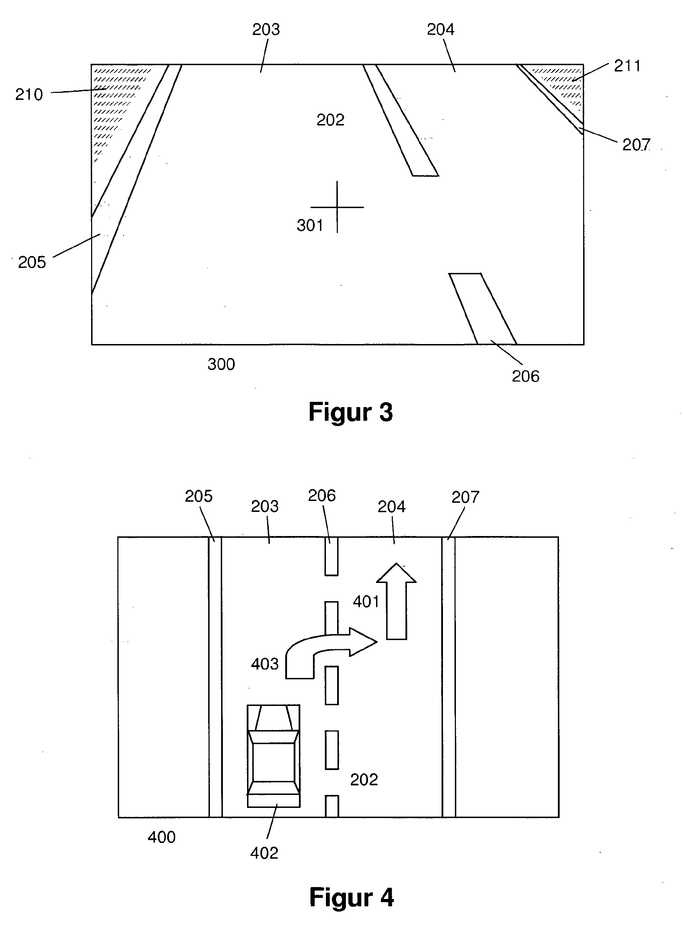

Dazu wird zunächst mittels der Bildaufnahmeeinheit ein Bild 300 eines vor dem Fahrzeug 201 liegenden Bereichs aufgenommen. Dieses in **Figur 3** dargestellte Bild 300 zeigt folgende Objekte: die Fahrbahn 202 mit den Fahrspuren 203, 204, die durchgängigen Begrenzungslinien 205, 207, die mehrstreifige Leitlinie 206 und Teile der außerhalb der Fahrbahn 202 angeordneten Flächen 210 und 211.

Das Bild 300 kann von der Bildaufnahmeeinheit zu der Navigationseinrichtung in einem geeigneten Bilddatenformat übertragen und dann mittels der Navigationseinrichtung unter Verwendung einer Bildauswertesoftware ausgewertet werden. Bei dem Bilddatenformat handelt es sich beispielsweise um JPEG, TIFF, GIF oder BITMAP.

Alternativ dazu kann, falls die Bildaufnahmeeinheit in einem separaten tragbaren Gerät angeordnet ist, die Bildauswertung auch mittels des tragbaren Geräts erfolgen, wonach das Ergebnis der Bildauswertung in einem geeigneten Datenformatan die Navigationseinrichtung übertragen wird.

Des Weiteren kann die.Bildauswertung auch auf das separate tragbare Gerät und die Navigationseinrichtung aufgeteilt werden. Dann wird ein erster Teil der Bildauswertung mittels des Geräts ausgeführt, wonach ein Zwischenergebnis in einem geeigneten Datenformat an die Navigationseinrichtung übertragen wird. Anschließend wird ein zweiter Teil der Bildauswertung mittels der Navigationseinrichtung ausgeführt.

Bei der Bildauswertung werden die Bildelemente des Bildes 300 erkannt, realen Objekten zugeordnet und hinsichtlich ihrer Anordnung untersucht. Dementsprechend werden bei dem Bild 300 drei Linien erkannt, von denen die rechte und linke durchgängig sind, während die mittlere unterbrochen ist. Die rechte Linie und die linke Linie werden als Begrenzungslinien 205, 207 identifiziert und die mittlere Linie wird als Leitlinie 206 identifiziert.

Ferner wird festgestellt, dass die durch ein Kreuz gekennzeichnete Bildmitte 301 zwischen der linken Begrenzungslinie 205 und der Leitlinie 206 angeordnet ist.

Daraus wird geschlussfolgert, dass sich die aktuelle Fahrspur zwischen der linken Begrenzungslinie 205 und der Leitlinie 206 befindet. Daraus, dass die mehrstreifige Leitlinie 206 rechts der Bildmitte angeordnet ist, wird außerdem geschlussfolgert, dass es sich bei der aktuellen Fahrspur um die linke der beiden aus den Landkartendaten bekannten Fahrspuren handelt.

Damit ist das Bestimmen der aktuellen Fahrspur abgeschlossen.

Alternativ zum Gewinnen der Anzahl der Fahrspuren aus den Landkartendaten ließe sich die Anzahl der Fahrspuren auch aus dem Bild 300 entnehmen. Aus dem Vorhandensein von drei Linien, von denen die äußeren durchgängig sind und jeweils neben einer außerhalb der Fahrbahn angeordneten Fläche verlaufen, lässt sich so auf zwei Fahrspuren schließen.

Alternativ zum Bestimmen der aktuellen Fahrspur anhand von linienförmigen Fahrbahnmarkierungen kann die aktuelle Fahrspur auch anhand von anderen Fahrbahnmarkierungen bestimmt werden, beispielsweise anhand von Fahrtrichtungspfeilen.

Ferner kann alternativ zum Bestimmen der aktuellen Fahrspur anhand von Fahrbahnmarkierungen die aktuelle Fahrspur auch anhand anderer Merkmale der Umgebung eines Fahrzeugs bestimmt werden, beispielsweise anhand von Bordsteinkanten, Leitplanken, Leitpfosten; Grünstreifen oder Grenzen einer Asphaltdecke oder gepflasterten Fläche. Diese Vorgehensweise ist insbesondere dann vorteilhaft, wenn Fahrbahnmarkierungen nicht oder nur ungenügend erkennbar sind und daher von der Bildauswertesoftware nicht identifiziert werden können.

Dementsprechend könnten im vorliegenden Fall alternativ zu den Begrenzungslinien 205 und 207 auch die Grenzen zwischen der Fahrbahn 202 und den neben der Fahrbahn angeordneten Flächen 210 und 211 identifiziert und zum Bestimmen der aktuellen Fahrspur benutzt werden.

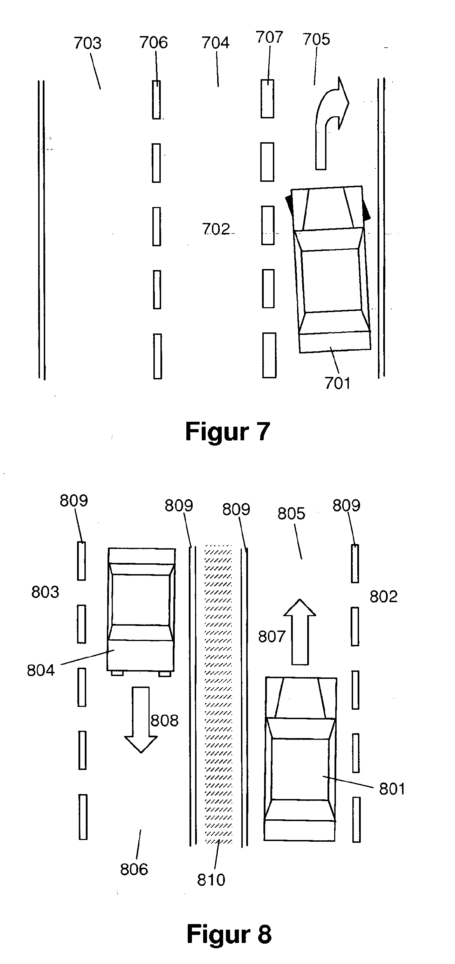

Des Weiteren kann die aktuelle Fahrspur auch anhand der Position oder der Fahrtrichtung eines anderen Fahrzeugs bestimmt werden, wie weiter unten bezüglich Figur 8 beschrieben wird.

Nach dem Bestimmen der aktuellen Fahrspur wird ein Prüfschritt ausgeführt. Bei dem Prüfschritt wird festgestellt, ob die bevorzugte Fahrspur und die aktuelle Fahrspur miteinander übereinstimmen. Während im vorliegenden Fall die bevorzugte Fahrspur die rechte der zwei Fahrspuren 203, 204 ist, handelt es sich bei der aktuellen Fahrspur um die erste der zwei Fahrspuren. Demzufolge wird ein Prüfergebnis bereitgestellt, gemäß welchem die bevorzugte Fahrspur und die aktuelle Fahrspur nicht miteinander übereinstimmen.

Damit ist der Prüfschritt abgeschlossen.

Würden dagegen die bevorzugte Fahrspur und die aktuelle Fahrspur übereinstimmen, könnte das erfindungsgemäße Verfahren bereits hier beendet werden.

Da aber im vorliegenden Fall die bevorzugte Fahrspur und die aktuelle Fahrspur nicht übereinstimmen, wird eine Fahranweisung bereitgestellt, gemäß der das Fahrzeug 201 aus der aktuellen Fahrspur 203 in die bevorzugte Fahrspur 204 gelangt. Daraus, dass die aktuelle Fahrspur die linke und die bevorzugte Fahrspur die rechte von zwei Fahrspuren 203, 204 ist, ergibt sich, dass das Fahrzeug 201 eine Spur nach rechts fahren muss, um die bevorzugte Fahrspur zu erreichen. Dementsprechend wird eine Fahranweisung mit der Aufforderung bereitgestellt, das Fahrzeug 201 eine Fahrspur nach rechts beziehungsweise auf die rechte Fahrspur zu steuern.

Zum Ausgeben der Fahranweisung an den Fahrzeugführer werden die bevorzugte Fahrspur und die aktuelle Fahrspur auf dem Bildschirm der Navigationseinrichtung gezeigt. Hierfür wird bezugnehmend auf **Figur 4** auf dem Bildschirm ein Bild 400 der Fahrbahn 202 dargestellt. Das Bild 400 zeigt die Fahrbahn 202 mit den symbolhaft dargestellten Fahrspuren 203 und 204 und den Fahrbahnmarkierungen 205, 206 und 207 in einer Draufsicht. Alternativ dazu kann das Bild jedoch auch eine andere Art einer Ansicht, beispielsweise eine perspektivische Ansicht, eine 3D-Ansicht oder eine fotografische Ansicht, zeigen.

Auf der rechten Fahrspur 204 ist eine erste Fahrspurmarkierung 401 dargestellt, welche die Form eines in Fahrtrichtung weisenden geraden Pfeils hat und die Fahrspur 204 als bevorzugte Fahrspur kennzeichnet. Außerdem ist auf der linken Fahrspur 203 eine als Fahrzeugsymbol ausgeführte zweite Fahrspurmarkierung 402 gezeigt, welche die Fahrspur 203 als aktuelle Fährspur kennzeichnet. Das Fahrzeugsymbol ist als Draufsicht auf einen PKW ausgebildet.

Alternativ zu Figur 7 können die bevorzugte Fahrspur und die aktuelle Fahrspur auch mit anderen Fahrspurmarkierungen gekennzeichnet sein, wobei aber die erste Fahrspurmarkierung 401 und die zweite Fahrspurmarkierung 402 unterschiedlich ausgebildet sein müssen. Beispielsweise können beide Fahrspurmarkierungen 401, 402 als Pfeile ausgeführt sein, die sich in ihrer Farbe unterscheiden.

Einem Betrachter des Bildschirms, beispielsweise dem Fahrzeugführer des Fahrzeugs 201, wird auffallen, dass die zweite Fahrspurmarkierung 402 in Form eines Fahrzeugsymbols auf einer anderen Fahrspur als die pfeilförmige Fahrbahnmarkierung 401 positioniert ist. Dadurch erhält der Fahrzeugführer die Information, dass sich das Fahrzeug 201 nicht auf der bevorzugten Fahrspur befindet. Darüber hinaus kann der Fahrzeugführer aus der Bildschirmdarstellung auch entnehmen, welche Fahrspur er gemäß der Fahranweisung ansteuern soll, nämlich die rechte Fahrspur 204.

Gemäß einer vorteilhaften Ausführungsform der Erfindung wird auf dem Bildschirm der Navigationseinrichtung zusätzlich ein Fahrspurwechselpfeil 403 angezeigt, welcher von der aktuellen Fahrspur 203 zu der bevorzugten Fahrspur 204 verläuft und einen Wechsel von der aktuellen Fahrspur 203 auf die bevorzugte Fahrspur 204 gemäß der Fahranweisung symbolisiert. Der Fahrspurwechselpfeil 403 kann in einer besonders auffälligen Art dargestellt sein, beispielsweise in einer Signalfarbe oder als blinkender Pfeil. Der Fahrspurwechselpfeil 403 verstärkt die Wahrnehmung des Fahrzeugführers dafür, dass sich das Fahrzeug 201 auf der falschen Fahrspur befindet. Darüber hinaus wird der Fahrzeugführer den Fahrspurwechselpfeil 403 als besonders deutliche Aufforderung zu einem Wechsel von der linken Fahrspur 203 auf die rechte Fahrspur 204 verstehen.

Zusätzlich kann die Fahranweisung auch als Sprachsignal über eine Lautsprecheranlage der Ausgabeeinheit der Navigationseinrichtung ausgegeben werden. Das Sprachsignal kann beispielsweise die Form: "Eine Spur nach rechts wechseln." oder "Auf die rechte Fahrspur wechseln." aufweisen.

Mit dem Ausgeben der Fahranweisung ist das erfindungsgemäße Verfahren abgeschlossen.

Zur Erhöhung der Zuverlässigkeit des erfindungsgemäßen Verfahrens wird eine weitere Ausführungsform bereitgestellt. Demgemäß wird vor dem Bestimmen der aktuellen Fahrspur folgende Prüfprozedur durchlaufen:
Zunächst wird eine erste Fahrspuranzahl aus den Landkartendaten gewonnen, welche im vorliegenden Fall zwei beträgt.

Ferner wird unter Verwendung der Bildaufnahmeeinheit eine zweite Fahrspuranzahl bestimmt. Im vorliegenden Fall wird aus der in Bild 300gezeigten Anordnung der Begrenzungslinien 205 und 207, der Leitlinie 206 und der Flächen 210 und 211 geschlussfolgert, dass zwei Fahrspuren vorliegen.

Dann wird die erste Fahrspuranzahl mit der zweiten Fahrspuranzahl verglichen, was im vorliegenden Fall zu dem Ergebnis führt, dass beide Fahrspuranzahlen miteinander übereinstimmen. Daher wird angenommen, dass die zweite Fahrspuranzahl korrekt bestimmt wurde und somit auch die aktuelle Fahrspur, welche ebenfalls unter Verwendung der Bildaufnahmeeinheit bestimmt wird, korrekt bestimmt wird.

Damit ist die Prüfprozedur beendet und die aktuelle Fahrspur kann bestimmt werden.

Sollten dagegen die erste Fahrspuranzahl und die zweite Fahrspuranzahl nicht miteinander übereinstimmen, wird angenommen, dass die zweite Fahrspuranzahl nicht korrekt bestimmt wurde und somit auch die aktuelle Fahrspur nicht korrekt bestimmt wird. In diesem Fall werden das Bestimmen der ersten Fahrspuranzahl, das Bestimmen der zweiten Fahrspuranzahl und das Vergleichen der ersten Fahrspuranzahl mit der zweiten Fahrspuranzahl so oft wiederholt, bis beide Fahrspuranzahlen miteinander übereinstimmen. Erst dann ist die Prüfprozedur beendet und die aktuelle Fahrspur kann bestimmt werden.

Alternativ dazu kann auch ein Abbruch des Verfahrens erfolgen und eine Fehlermeldung an den Benutzer der Navigationseinrichtung ausgegeben werden, wenn die erste Fahrspuranzahl und die zweite Fahrspuranzahl nicht miteinander übereinstimmen. Dabei ist es möglich, den Abbruch und die Ausgabe der Fehlermeldung erst dann vorzunehmen, wenn eine bestimmte Zahl von Wiederholungen durchlaufen wurde.

Durch diese Vorgehensweise wird die Zuverlässigkeit des erfindungsgemäßen Verfahrens erhöht, indem vermieden wird, dass die Fahranweisung unter Verwendung einer fehlerhaft bestimmten aktuellen Fahrspur generiert wird.

Um die Zuverlässigkeit des erfindungsgemäßen Verfahrens weiter zu erhöhen, kann das Ermitteln der zweiten Fahrspuranzahl auch unter Verwendung mehrerer Bilder, die nacheinander in kurzen zeitlichen Abständen aufgenommen werden, ausgeführt werden, beispielsweise unter Verwendung von vier aufeinanderfolgenden Bildern. Dabei wird für jedes der Bilder eine zugeordnete Fahrspuranzahl bereitgestellt, die mit der ersten Fahrspuranzahl verglichen wird. Nur wenn jede der so ermittelten Fahrspuranzahlen mit der ersten Fahrspuranzahl übereinstimmt, wird das erfindungsgemäße Verfahren mit dem Bestimmen der aktuellen Fahrspur fortgesetzt.

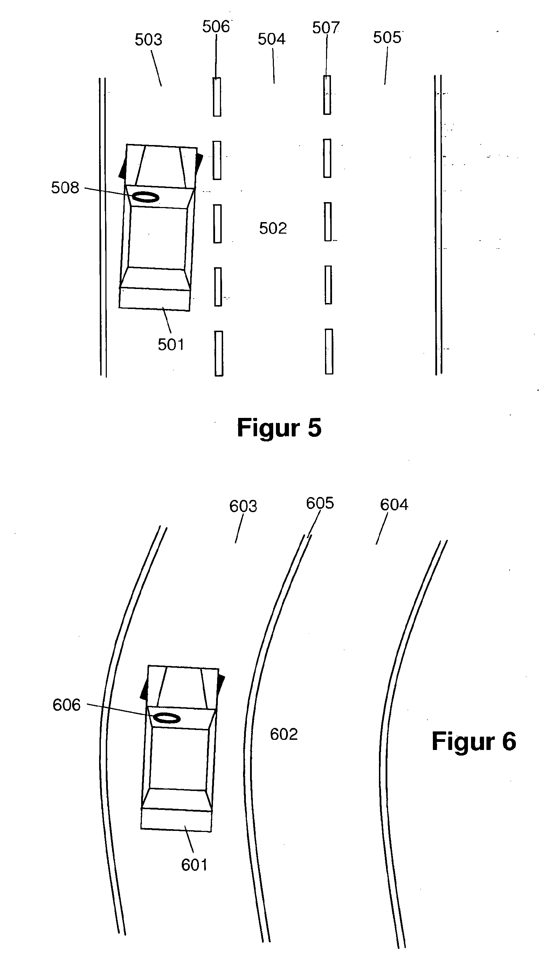

**Figur 5** zeigt eine Draufsicht auf ein Fahrzeug 501 gemäß einer weiteren Ausführungsform der Erfindung.

Das Fahrzeug 501 weist eine Navigationseinrichtung und eine Bildaufnahmeeinheit (nicht gezeigt) auf und befindet sich auf einer Fahrbahn 502. Die Fahrbahn 502 verfügt über drei Fahrspuren 503, 504 und 505, welche durch die mehrstreifigen Leitlinien 506 und 507 voneinander getrennt sind.

Gemäß der Erfindung wird zunächst die Position des Fahrzeugs 501 bestimmt. Anschließend wird eine der Fahrzeugposition zugeordnete bevorzugte Fahrspur bestimmt, nämlich die mittlere Fahrspur 504. Danach wird unter Verwendung der Bildaufnahmeeinheit die aktuelle Fahrspur bestimmt, nämlich die linke Fahrspur 503. Aus einem Vergleich der bevorzugten Fahrspur 504 und der aktuellen Fahrspur 503 im Rahmen eines Prüfschritts ergibt sich, dass diese beiden Fahrspuren nicht übereinstimmen.

Die Besonderheit der Ausführungsform besteht darin, dass nun zusätzlich-geprüft wird, ob ein baldiger Wechsel des Fahrzeugs 501 auf die bevorzugte Fahrspur 504 wahrscheinlich ist. Die Prüfung wird anhand der Stellung des Lenkrads 508 des Fahrzeugs 501 durchgeführt. Da das Lenkrad 508 in einem ausreichend großen Drehwinkel nach rechts gedreht ist, wird angenommen, dass ein baldiger Wechsel des Fahrzeugs 501 auf die bevorzugte Fahrspur 504 wahrscheinlich ist. Die bevorzugte Fahrspur 504 ist nämlich rechts von der aktuellen Fahrspur 503 angeordnet. Somit wird im vorliegenden Fall keine Fahranweisung bereitgestellt und ausgegeben, obwohl sich das Fahrzeug 501 nicht auf der bevorzugten Fahrspur 504 befindet.

Sollte dagegen ein baldiger Wechsel des Fahrzeugs 501 auf die bevorzugte Fahrspur 504 nicht wahrscheinlich sein, würde eine Fahranweisung in Form einer Aufforderung zu einem Fahrspurwechsel bereitgestellt und ausgegeben.

Alternativ zur Stellung des Lenkrads 508 kann auch anhand der Stellung eines Rads des Fahrzeugs 501 oder anhand des Aktivierungszustandes eines Fahrtrichtungsanzeigers des Fahrzeugs 501, beispielsweise eines Blinkers, festgestellt werden, ob ein Wechsel des Fahrzeugs 501 auf die bevorzugte Fahrspur wahrscheinlich ist. Ein Wechsel des Fahrzeugs 501 auf die bevorzugte Fahrspur wäre beispielsweise dann wahrscheinlich, wenn ein Vorderrad des Fahrzeugs 501 in Richtung der bevorzugten Fahrspur 504 gedreht wäre oder ein Fahrtrichtungsanzeiger des Fahrzeugs eine Absicht des Fahrzeugführers anzeigen würde, die aktuelle Fahrspur in Richtung der bevorzugten Fahrspur zu verlassen.

Der Vorteil dieser Ausführungsform besteht darin, dass der Fahrzeugführer nur dann zu einem Fahrspurwechsel aufgefordert wird, wenn das Fahrzeug, welches eine falsche Fahrspur befährt, nicht die richtige Spur ansteuert beziehungsweise eine derartige Absicht anzeigt. Andernfalls wird keine Aufforderung zu einem Fahrspurwechsel ausgegeben. Damit werden überflüssige Fahranweisungen vermieden.

**Figur 6** zeigt eine Draufsicht auf ein Fahrzeug 601 gemäß einer weiteren Ausführungsform der Erfindung.

Das Fahrzeug 601 weist eine Navigationseinrichtung und eine Bildaufnahmeeinheit (nicht gezeigt) auf und befindet sich auf einer Fahrbahn 602. Die Fahrbahn 602 folgt einer Rechtskurve und verfügt über zwei Fahrspuren 603 und 604, welche durch die Begrenzungslinie 605 voneinander getrennt sind.

Gemäß der Erfindung wird zunächst die Position des Fahrzeugs 601 bestimmt. Danach wird eine der Fahrzeugposition zugeordnete bevorzugte Fahrspur bestimmt, nämlich die rechte Fahrspur 604 der zwei Fahrspuren 603, 604. Danach wird unter Verwendung der Bildaufnahmeeinheit eine aktuelle Fahrspur bestimmt, nämlich die linke Fahrspur 603 der zwei Fahrspuren 603, 604. Aus einem anschließend vorgenommenen Vergleich der bevorzugten Fahrspur 604 mit der aktuellen Fahrspur 603 ergibt sich, dass diese beiden Fahrspuren nicht übereinstimmen.

Bei einem Prüfschritt wird nun festgestellt, ob ein Wechsel des Fahrzeugs 601 auf die bevorzugte Fahrspur 604 wahrscheinlich ist. Im Unterschied zu der vorgenannten Ausführungsform der Erfindung wird die Prüfung nicht nur unter Berücksichtigung der Stellung des Lenkrads 606 vorgenommen, sondern auch unter Berücksichtigung von Kurveninformationen. Die Kurveninformationen werden aus den Landkartendaten der Navigationseinrichtung gewonnen und kennzeichnen den Verlauf der Fahrbahn 602 an der Fahrzeugposition. Die Kurveninformationen enthalten beispielsweise die Art der Kurve (Rechtskurve oder Linkskurve) und den Krümmungsradius der Kurve, welcher angibt, wie stark die Fahrbahn an der Fahrzeugposition von einer Geraden abweicht.

Im vorliegenden Fall wird ein Prüfergebnis erhalten, gemäß dem das Lenkrad 606 des Fahrzeugs 601 in einem bestimmten Drehwinkel nach rechts gedreht ist, während sich das Fahrzeug 601 an einer Position in einer Rechtskurve mit einem bestimmten Krümmungsradius befindet. Die Auswertung dieser Informationen, insbesondere des Lenkraddrehwinkels und des Krümmungsradius, ergibt, dass das Fahrzeug 601 zwar nach rechts gesteuert wird, aber ein Wechsel des Fahrzeugs 601 auf die rechte Fahrspur 604 nicht wahrscheinlich ist. Das Fahrzeug 601 wird also nicht auf die bevorzugte Fahrspur 604 gesteuert, sondern folgt lediglich dem Kurvenverlauf.

Deshalb wird eine Fahranweisung in Form einer Aufforderung zu einem Fahrspurwechsel generiert und ausgegeben, obwohl das Lenkrad 606 des Fahrzeugs 601 nach rechts gedreht ist. Mit der Fahranweisung wird der Fahrzeugführer des Fahrzeugs 601 aufgefordert, das Fahrzeug 601 auf die rechte Fahrspur 604 zu steuern.

Wäre dagegen der Drehwinkel des Lenkrads 606 derart groß, dass ein Wechsel des Fahrzeugs 601 auf die rechte Fahrspur 604 wahrscheinlich wäre, würde keine Fahranweisung ausgegeben.

Folglich kann durch das zusätzliche Berücksichtigen von Kurveninformationen auch dann zuverlässig festgestellt werden, ob ein Wechsel des Fahrzeugs 601 auf die bevorzugte Fahrspur 604 wahrscheinlich ist, wenn sich das Fahrzeug 601 in einer Fahrbahnkurve befindet.

**Figur 7** zeigt eine Draufsicht auf ein Fahrzeug 701 gemäß einer weiteren Ausführungsform der Erfindung.

Das Fahrzeug 701 weist eine Navigationseinrichtung und eine Bildaufnahmeeinheit (nicht gezeigt) auf und befindet sich auf einer Fahrbahn 702 einer Autobahn. Die Fahrbahn 702 verfügt über drei Fahrspuren 703, 704 und 705, welche durch zwei Leitlinien 706, 707 voneinander getrennt sind. Die linke Fahrspur 703 und die mittlere Fahrspur 704 gehören zu einer Hauptfahrbahn der Autobahn, während die rechte Fahrspur 705 Teil einer Autobahnausfahrt ist.

Gemäß einer Zielführung soll das Fahrzeug 701 die Autobahn verlassen und deshalb die rechte der drei Fahrspuren 703, 704 und 705 befahren. Das heißt, die rechte Fahrspur 705 ist die bevorzugte Fahrspur. Da sich das Fahrzeug 701 gemäß dem Prüfergebnis eines Prüfschritts bereits auf der bevorzugten Fahrspur befindet, das heißt, die rechte Fahrspur 705 ist gleichzeitig die aktuelle Fahrspur, stimmen die bevorzugte Fahrspur und die aktuelle Fahrspur miteinander überein. Deshalb wird keine Fahranweisung ausgegeben.

Als Besonderheit der vorliegenden Ausführungsform wird aber festgestellt, ob ein Wechsel des Fahrzeugs 701 auf eine andere Fahrspur wahrscheinlich ist. Da das Fahrzeug 701 in Richtung der Hauptfahrbahn gesteuert wird, wie anhand der Stellung eines der Vorderräder des Fahrzeugs 701 festgestellt werden kann, ist ein Wechsel des Fahrzeugs 701 auf eine andere Fahrspur, nämlich auf die mittlere Fahrspur 704, wahrscheinlich.

Daher wird unter Verwendung einer Lautsprecheranlage der Ausgabeeinheit der Navigationseinrichtung ein Warnhinweis ausgegeben, beispielsweise in Form des Sprachsignals: "Achtung, Sie verlassen die berechnete Route."

Der Vorteil dieser Ausführungsform der Erfindung besteht darin, dass der Fahrzeugführer gewarnt wird, wenn das Fahrzeug im Begriff ist, die richtige Fahrspur gemäß einer Zielführung zu verlassen.

**Figur 8** zeigt eine Draufsicht auf ein Fahrzeug 801 zur Verdeutlichung einer weiteren Ausführungsform der Erfindung.

Gemäß dieser Ausführungsform wird eine dem Fahrzeug 801 zugeordnete aktuelle Fahrspur unter Berücksichtigung der Position und Fahrtrichtung eines anderen Fahrzeugs 804 bestimmt.

Das Fahrzeug 801 weist eine Navigationseinrichtung und eine Bildaufnahmeeinheit (nicht gezeigt) auf und befährt die linke Fahrspur 805 einer ersten Richtungsfahrbahn 802 einer Autobahn in einer durch einen Pfeil symbolisierten ersten Fahrtrichtung 807.

Die linke Fahrspur 806 der zweiten Richtungsfahrbahn 803 wird von dem anderen Fahrzeug 804 in einer durch einen Pfeil symbolisierten zweiten Fahrtrichtung 808 befahren. Die erste Fahrtrichtung 807 und die zweite Fahrtrichtung 808 sind einander entgegengesetzt. Mit anderen Worten kommt das andere Fahrzeug 804 dem Fahrzeug 801 entgegen.

Zum Bestimmen der dem Fahrzeug 801 zugeordneten aktuellen Fahrspur wird aus den Landkartendaten der Navigationseinrichtung die Information entnommen, dass die Autobahn über zwei Richtungsfahrbahnen 802, 803 verfügt, von denen jede mehrere Fahrspuren aufweist.

Ferner werden mehrere Positionen des Fahrzeugs 801 zu jeweils unterschiedlichen Zeitpunkten mittels einer GPS-Antenne ermittelt. Aus den Positionen wird die Fahrtrichtung 807 des Fahrzeugs 801 bestimmt, aus welcher geschlussfolgert wird, dass das Fahrzeug 801 die erste Richtungsfahrbahn 802 der Autobahn befährt.

Außerdem werden mittels der Bildaufnahmeeinheit mehrere Bilder zu jeweils unterschiedlichen Zeitpunkten aufgenommen. Die Bilder zeigen jeweils einen vor dem Fahrzeug 801 liegenden Bereich, welcher derart gewählt ist, dass auf dem jeweiligen Bild zumindest ein Teil des anderen Fahrzeugs 804 erkennbar ist.

Anschließend werden die Bilder folgendermaßen ausgewertet:
Aus der Anordnung des anderen Fahrzeugs 804 auf zumindest einem der Bilder wird geschlussfolgert, dass sich das andere Fahrzeug 804 auf einer Fahrspur befindet, die links neben der Fahrspur angeordnet ist, auf welcher sich das Fahrzeug 801 befindet.

Ferner wird aus einem Vergleich der Anordnung des anderen Fahrzeugs 804 auf einem der Bilder mit der Anordnung des gleichen Fahrzeugs 804 auf einem früher oder später aufgenommenen Bild geschlussfolgert, dass das andere Fahrzeug 804 die Autobahn in einer Fahrtrichtung befährt, die der Fahrtrichtung des Fahrzeugs 801 entgegengesetzt ist. Bei diesem Vergleich können der zeitliche Abstand zwischen den Aufnahmen zweier Bilder und die Geschwindigkeit des anderen Fahrzeugs 804 gemäß einer Tachometer-Messung berücksichtigt werden.

Zusammenfassend werden unter Verwendung der Landkartendaten, der GPS-Antenne und der Bildaufnahmeeinheit folgende Informationen erhalten:
(a) Das Fahrzeug 801 befindet sich auf einer Autobahn mit zwei Richtungsfahrbahnen, die jeweils mehrere Fahrspuren aufweisen.
(b) Das Fahrzeug 801 befährt die erste Richtungsfahrbahn 802 der Autobahn.
(c) Auf einer links neben dem Fahrzeug 801 angeordneten Fahrspur kommt dem Fahrzeug 801 ein anderes Fahrzeug 804 entgegen.

Aus diesen Informationen lässt sich schließen, dass die aktuelle Fahrspur die linke Fahrspur 805 der ersten Richtungsfahrbahn 802 ist.

Damit ist das Bestimmen der aktuellen Fahrspur abgeschlossen.

Eine Besonderheit dieser Ausführungsform der Erfindung besteht darin, dass bei der Bildauswertung außer dem entgegenkommenden Fahrzeug 804 keine weiteren Merkmale der Umgebung des Fahrzeugs 801 erkannt werden müssen. Dies ist vor allem dann von Vorteil, wenn die Fahrbahnmarkierungen 809 oder der Grünstreifen 810 mittels der Bildaufnahmeeinheit nicht oder nur schlecht erkennbar sind, beispielsweise weil sie durch weitere Fahrzeuge verdeckt werden.

Gemäß dem Grundgedanken dieser Ausführungsform, die aktuelle Fahrspur unter Berücksichtigung der Position oder der Fahrtrichtung eines anderen Fahrzeugs zu bestimmen, ist es auch möglich, bei der Bildauswertung andere Fahrzeuge zu berücksichtigen, die sich rechts neben dem Fahrzeug 801 befinden oder die gleiche Fahrtrichtung wie das Fahrzeug 801 aufweisen.

## Patentansprüche

1. Verfahren zum Betreiben einer in einem Fahrzeug (101) angeordneten Navigationseinrichtung (103), die eine nichtflüchtige Speichereinheit, in der Landkartendaten abgelegt sind, eine Bildaufnahmeeinheit (104) und eine Ausgabeeinheit aufweist, mit den Schritten:
a) Bestimmen einer Position des Fahrzeugs (101),
b) Bestimmen einer der Position zugeordneten bevorzugten Fahrspur unter Verwendung der Landkartendaten,
g) Bestimmen einer der Position zugeordneten aktuellen Fahrspur, auf der sich das Fahrzeug (101) befindet, unter Verwendung der Bildaufnahmeeinheit (104),
h) Ausführen eines Prüfschritts unter Berücksichtigung der bevorzugten Fahrspur und der aktuellen Fahrspur, sodass ein Prüfergebnis bereitgestellt wird, und, in Abhängigkeit von dem Prüfergebnis,
i) Generieren einer Fahranweisung unter Berücksichtigung der bevorzugten Fahrspur und der aktuellen Fahrspur, sodass beim Befolgen der Fahranweisung das Fahrzeug (101) die bevorzugte Fahrspur erreicht, und
j) Ausgeben der Fahranweisung unter Verwendung der Ausgabeeinheit,
**dadurch gekennzeichnet, dass** vor dem Bestimmen der aktuellen Fahrspur folgende Schritte ausgeführt werden:
c) Bestimmen einer ersten Fahrspuranzahl unter Verwendung der Landkartendaten,
d) Bestimmen einer zweiten Fahrspuranzahl unter Verwendung der Bildaufnahmeeinheit (104),
e) Feststellen, ob die erste Fahrspuranzahl und die zweite Fahrspuranzahl miteinander übereinstimmen, und
f) Wiederholen der Schritte c) bis e), wenn die erste Fahrspuranzahl und die zweite Fahrspuranzahl nicht miteinander übereinstimmen,
wobei die Schritte g) bis j) nur dann ausgeführt werden, wenn die erste Fahrspuranzahl und die zweite Fahrspuranzahl miteinander übereinstimmen.

2. Verfahren gemäß Anspruch 1,
wobei der Prüfschritt aufweist:
Feststellen, ob die bevorzugte Fahrspur und die aktuelle Fahrspur miteinander übereinstimmen,
wobei die Fahranweisung generiert und ausgegeben wird, wenn die bevorzugte Fahrspur und die aktuelle Fahrspur nicht miteinander übereinstimmen, und
die Fahranweisung nicht generiert und nicht ausgegeben wird, wenn die bevorzugte Fahrspur und die aktuelle Fahrspur miteinander übereinstimmen.

3. Verfahren gemäß Anspruch 1,
wobei der Prüfschritt aufweist:
Feststellen, ob die bevorzugte Fahrspur und die aktuelle Fahrspur miteinander übereinstimmen,
Feststellen, ob ein Wechsel des Fahrzeugs (101) auf die bevorzugte Fahrspur wahrscheinlich ist,
wobei die Fahranweisung generiert und ausgegeben wird, wenn die bevorzugte Fahrspur und die aktuelle Fahrspur nicht miteinander übereinstimmen und ein Wechsel des Fahrzeugs (101) auf die bevorzugte Fahrspur nicht wahrscheinlich ist, und
die Fahranweisung nicht generiert und nicht ausgegeben wird, wenn die bevorzugte Fahrspur und die aktuelle Fahrspur miteinander übereinstimmen oder die bevorzugte Fährspur und die aktuelle Fahrspur nicht miteinander übereinstimmen und ein Wechsel des Fahrzeugs (101) auf die bevorzugte Fahrspur wahrscheinlich ist.

4. Verfahren gemäß einem der Ansprüche 2 oder 3,
wobei, wenn die bevorzugte und die aktuelle Fahrspur übereinstimmen,
festgestellt wird, ob ein Wechsel des Fahrzeugs (101) auf eine andere Fahrspur wahrscheinlich ist, und
unter Verwendung der Ausgabeeinheit ein Warnhinweis ausgegeben wird, wenn ein Wechsel des Fahrzeugs (101) auf eine andere Fahrspur wahrscheinlich ist.

5. Verfahren gemäß einem der Ansprüche 3 oder 4,
wobei unter Berücksichtigung
- einer Lenkradstellung,
- einer Radstellung oder
- dem Aktivierungszustand eines Fahrtrichtungsanzeigers
des Fahrzeugs (101) festgestellt wird, ob der Fahrspurwechsel wahrscheinlich ist.

6. Verfahren gemäß Anspruch 5,
wobei unter Berücksichtigung einer Kurveninformation bestimmt wird, ob der Fahrspurwechsel wahrscheinlich ist.

7. Verfahren gemäß einem der vorhergehenden Ansprüche,
wobei mittels der Navigationseinrichtung (103) eine Route berechnet wird und die bevorzugte Fahrspur unter Berücksichtigung der Route bestimmt wird.

8. Verfahren gemäß einem der vorhergehenden Ansprüche,
wobei die aktuelle Fahrspur unter Berücksichtigung
- einer Fahrbahnmarkierung (809),
- einer Leitplanke,
- eines Begrenzungspfostens,
- eines Grünstreifens (810),
- einer Fahrbahngrenze,
- der Position eines anderen Fahrzeugs oder
- der Fahrtrichtung eines anderen Fahrzeugs
bestimmt wird.

9. Verfahren gemäß einem der vorhergehenden Ansprüche,
wobei die Ausgabeeinheit eine Anzeigeeinheit aufweist und mittels der Anzeigeeinheit die bevorzugte Fahrspur mit einer ersten Fahrspurmarkierung (401) und die aktuelle Fahrspur mit einer zweiten Fahrspurmarkierung (402) angezeigt wird,
wobei die erste Fahrspurmarkierung (401) und die zweite Fahrspurmarkierung (402) unterschiedlich ausgebildet sind.

10. Verfahren gemäß einem der vorhergehenden Ansprüche,
wobei die Ausgabeeinheit eine Anzeigeeinheit aufweist und die Fahranweisung einen Fahrspurwechselpfeil (403) aufweist, welcher mittels der Anzeigeeinheit angezeigt wird und von der aktuellen Fahrspur zu der bevorzugten Fahrspur weist.

11. Verfahren gemäß einem der vorhergehenden Ansprüche,
welches abgebrochen wird, wenn eine bestimmte Anzahl von Wiederholungen der Schritte c) bis e) durchlaufen wurde, ohne dass die erste Fahrspuranzahl und die zweite Fahrspuranzahl miteinander übereinstimmen.

12. Verfahren gemäß Anspruch 11,
bei dem beim Abbruch des Verfahrens eine Fehlermeldung an einen Benutzer der Navigationseinrichtung ausgegeben wird.

13. Verfahren gemäß einem der vorhergehenden Ansprüche,
wobei die Bildaufnahmeeinheit (104) in einem von der Navigationseinrichtung (103) räumlich getrennten transportablen Gerät angeordnet ist und
das Gerät und die Navigationseinrichtung (103) über eine drahtgebundene Verbindung oder über eine Funkverbindung miteinander gekoppelt sind.

14. Navigationseinrichtung (103), die in einem Fahrzeug (101) angeordnet ist und eine nichtflüchtige Speichereinheit, in der Landkartendaten abgelegt sind, eine Bildaufnahmeeinheit (104) und eine Ausgabeeinheit aufweist, wobei die Navigationseinrichtung (103) zum Ausführen eines Verfahrens gemäß einem der vorhergehenden Ansprüche eingerichtet ist.

## Claims

1. Method for operating a navigation device (103) arranged in a vehicle (101) wherein the navigation device (103) comprises a nonvolatile memory unit in which map data are stored, an image acquisition unit (104), and an output unit, the method comprising the steps of:
a) determining a position of the vehicle (101),
b) determining a preferred traffic lane assigned to the position using the map data,
g) determining a current traffic lane assigned to the position using the image acquisition unit (104) wherein the vehicle (101) is located on the current traffic lane,
h) performing a test step in consideration of the preferred traffic lane and the current traffic lane so that a test result is provided, and, depending on the test result
i) generating a driving instruction in consideration of the preferred traffic lane and the current traffic lane so that by following the driving instruction the vehicle (101) reaches the preferred traffic lane, and
j) outputting the driving instruction using the output unit,
**characterized in that**
the following steps are performed prior to the determination of the current traffic lane:
c) determining a first number of traffic lanes using the map data,
d) determining a second number of traffic lanes using the image acquisition unit (104),
e) determining if the first number of traffic lanes corresponds to the second number of traffic lanes,
f) repeating the steps c) to e) if the first number of traffic lanes does not correspond to the second number of traffic lanes,
wherein the steps g) to j) are only performed if the first number of traffic lanes corresponds to the second number of traffic lanes.

2. Method according to claim 1,
wherein the test step comprises:
determining if the preferred traffic lane corresponds to the current traffic lane
wherein the driving instruction is generated and output if the preferred traffic lane does not correspond to the current traffic lane and
the driving instruction is not generated and not output if the preferred traffic lane corresponds to the current traffic lane.

3. Method according to claim 1,
wherein the test step comprises:
determining if the preferred traffic lane corresponds to the current traffic lane,
determining if a change of the vehicle (101) to the preferred traffic lane is in prospect,
wherein the driving instruction is generated and output if the preferred traffic lane does not correspond to the current traffic lane and a change of the vehicle (101) to the preferred traffic lane is not in prospect and
the driving instruction is not generated and not output if the preferred traffic lane corresponds to the current traffic lane or the preferred traffic lane does not correspond to the current traffic lane and a change of the vehicle (101) to the preferred traffic lane is in prospect.

4. Method according to one of the claims 2 and 3,
wherein, if the preferred traffic lane corresponds to the current traffic lane, it is determined if a change of the vehicle (101) to another traffic lane is in prospect und a warning is output using the output unit if a change of the vehicle (101) to another traffic lane is in prospect.

5. Method according to one of the claims 3 and 4,
wherein, in consideration of
- a steering wheel position,
- a wheel position, or
- the activation state of a direction indicator of the vehicle (101),
it is determined if the traffic lane change is in prospect.

6. Method according to claim 5,
wherein, in consideration of a bend information, it is determined if the traffic lane change is in prospect.

7. Method according to one of the preceding claims,
wherein a route is calculated using the navigation device (103) and the preferred traffic lane is determined in consideration of the route.

8. Method according to one of the preceding claims,
wherein the current traffic lane is determined in consideration of
- a road marking (809),
- a guide board,
- a boundary post,
- a grass strip (810),
- a road boundary,
- the position of another vehicle, or
- the driving direction of another vehicle.

9. Method according to one of the preceding claims,
wherein the output unit comprises a display unit and, using the display unit, the preferred traffic lane is displayed with a first road marking (401) and the current traffic lane is displayed with a second road marking (402)
wherein the first road marking (401) and the second road marking (402) are different.

10. Method according to one of the preceding claims,
wherein the output unit comprises a display unit and the driving instruction comprises a traffic lane change arrow (403) which is displayed using the display unit and points from the current traffic lane to the preferred traffic lane.

11. Method according to one of the preceding claims,
which is canceled if a certain quantity of repetitions of the steps c) to e) were passed without the first number of traffic lanes corresponding to the second number of traffic lanes.

12. Method according to claim 11,
wherein, if the method is canceled, an error message is output to an user of the navigation device.

13. Method according to one of the preceding claims,
wherein the image acquisition unit (104) is arranged in a mobile device which is arranged separately from the navigation device (103) and
the mobile device and the navigation device (103) are connected by means of a wired connection or radio connection.

14. Navigation device (103) which is arranged in a vehicle (101) and comprises a nonvolatile memory unit in which map data are stored, an image acquisition unit (104), and an output unit, wherein the navigation device (103) is configured to perform a method according to one of the preceding claims.

## Revendications

1. Procédure permettant d'utiliser un dispositif de navigation (103) placé dans un véhicule (101) et comportant une unité mémoire non volatile dans laquelle sont enregistrées des données cartographiques, une unité de prise de vue (104) et une unité de sortie, la procédure étant composée des étapes suivantes :
a) détermination d'une position du véhicule (101),
b) détermination - au moyen des données cartographiques - d'une voie de circulation favorisée correspondant à la position,
g) détermination - au moyen de l'unité de prise de vue (104) - d'une voie de circulation actuelle correspondant à la position, et sur laquelle se trouve le véhicule (101),
h) exécution d'une étape de contrôle tenant compte de la voie de circulation favorisée et de la voie de circulation actuelle de manière à fournir un résultat de contrôle et, selon le résultat de contrôle,
i) génération d'une instruction de circulation tenant compte de la voie de circulation favorisée et de la voie de circulation actuelle de sorte que, si l'instruction de circulation est respectée, le véhicule (101) atteigne la voie de circulation favorisée, et
j) transmission d'une instruction de circulation au moyen de l'unité de sortie, **caractérisée en ce que** les étapes suivantes sont exécutées avant la détermination de la voie de circulation actuelle :
c) détermination d'un premier nombre de voies de circulation au moyen des données cartographiques,
d) détermination d'un deuxième nombre de voies de circulation au moyen de l'unité de prise de vue (104),
e) comparaison du premier nombre de voies de circulation et du deuxième nombre de voies de circulation pour déterminer s'ils concordent, et
f) répétition des étapes de c) à e) si le premier nombre de voies de circulation et le deuxième nombre de voies de circulation ne concordent pas,
les étapes de g) à j) n'étant exécutées que si le premier nombre de voies de circulation et le deuxième nombre de voies de circulation concordent.

2. Procédure selon la revendication 1,
**caractérisée en ce que** l'étape de contrôle consiste
à contrôler si la voie de circulation favorisée et la voie de circulation actuelle concordent,
l'instruction de circulation étant générée et transmise si la voie de circulation favorisée et la voie de circulation actuelle ne concordent pas, et
l'instruction de circulation n'étant ni générée ni transmise si la voie de circulation favorisée et la voie de circulation actuelle concordent.

3. Procédure selon la revendication 1,
**caractérisée en ce que** l'étape de contrôle consiste
à contrôler si la voie de circulation favorisée et la voie de circulation actuelle concordent,
à déterminer s'il est probable que le véhicule (101) rejoigne la voie de circulation favorisée,
l'instruction de circulation étant générée et transmise si la voie de circulation favorisée et la voie de circulation actuelle ne concordent pas et s'il n'est pas probable que le véhicule (101) rejoigne la voie de circulation favorisée, et
l'instruction de circulation n'étant ni générée ni transmise si la voie de circulation favorisée et la voie de circulation actuelle concordent, ou si la voie de circulation favorisée et la voie de circulation actuelle ne concordent pas et s'il est probable que le véhicule (101) rejoigne la voie de circulation favorisée.

4. Procédure selon l'une des revendications 2 ou 3,
**caractérisée en ce que**, si la voie de circulation favorisée et la voie de circulation actuelle concordent,
le système détermine s'il est probable que le véhicule (101) rejoigne une autre voie de circulation, et
un avis d'information est transmis au moyen de l'unité de sortie s'il est probable que le véhicule (101) rejoigne une autre voie de circulation.

5. Procédure selon l'une des revendications 3 ou 4,
**caractérisée en ce que** le système détermine, en tenant compte
- d'une position du volant,
- d'une position des roues ou
- de l'état d'activation d'un clignotant
du véhicule (101), si le changement de voie de circulation est probable.

6. Procédure selon la revendication 5,
**caractérisée en ce que** la probabilité du changement de voie de circulation est déterminée en fonction d'une information de virage.

7. Procédure selon l'une des revendications précédentes,
**caractérisée en ce qu'**un itinéraire est calculé au moyen du dispositif de navigation (103) et que la voie de circulation favorisée est déterminée en fonction de l'itinéraire.

8. Procédure selon l'une des revendications précédentes,
**caractérisée en ce que** la voie de circulation actuelle est déterminée en fonction
- d'un marquage de la chaussée (809),
- d'une glissière de sécurité,
- d'un poteau de délimitation,
- d'une bande de verdure (810),
- d'une limite de voie de circulation,
- de la position d'un autre véhicule ou
- du sens de circulation d'un autre véhicule.

9. Procédure selon l'une des revendications précédentes,
**caractérisée en ce que** l'unité de sortie comporte une unité d'affichage et que l'unité d'affichage affiche la voie de circulation favorisée avec un premier marquage de voie de circulation (401) ainsi que la voie de circulation actuelle avec un deuxième marquage de voie de circulation (402),
le premier marquage de voie de circulation (401) et le deuxième marquage de voie de circulation (402) étant représentés différemment.

10. Procédure selon l'une des revendications précédentes,
**caractérisée en ce que** l'unité de sortie comporte une unité d'affichage et que l'instruction de circulation comporte une flèche de changement de voie de circulation (403) affichée au moyen de l'unité d'affichage et pointant de la voie de circulation actuelle vers la voie de circulation favorisée.

11. Procédure selon l'une des revendications précédentes,
**caractérisée en ce que** la procédure est annulée si un certain nombre de répétitions des étapes de c) à e) a été effectué sans que le premier nombre de voies de circulation et le deuxième nombre de voies de circulation concordent.

12. Procédure selon la revendication 11,
**caractérisée en ce que**, si la procédure est annulée, un message d'erreur est transmis à un utilisateur du dispositif de navigation.

13. Procédure selon l'une des revendications précédentes,
**caractérisée en ce que** l'unité de prise de vue (104) est placée dans un appareil portable qui est séparé du dispositif de navigation (103) dans l'espace, et
que l'appareil et le dispositif de navigation (103) sont reliés entre eux par une liaison filaire ou par une liaison radio.

14. Dispositif de navigation (103) placé dans un véhicule (101) et comportant une unité mémoire non volatile dans laquelle sont enregistrées des données cartographiques, une unité de prise de vue (104) et une unité de sortie, le dispositif de navigation (103) étant configuré pour exécuter une procédure selon l'une des revendications précédentes.
